# EUROPÄISCHE PATENTSCHRIFT

(11) **EP 3 374 441 B1**
(45) Veröffentlichungstag und Bekanntmachung des Hinweises auf die Patenterteilung: **23.02.2022**
(21) Anmeldenummer: 16794514.6
(22) Anmeldetag: 28.10.2016
(51) Int. Cl.: C09D 5/18, C07F 9/6571, C09K 21/12, C08K 5/5357, D06M 13/282, D06N 3/00

(54) **MATERIALIEN MIT EINER BRANDSCHUTZBESCHICHTUNG ENTHALTEND EIN SPIROPHOSPHONAT**
MATERIALS HAVING A FIRE-RESISTANT COATING CONTAINING A SPIROPHOSPHONATE
MATÉRIAUX AVEC REVÊTEMENT DE PROTECTION INCENDIE CONTENANT UN SPIROPHOSPHONATE

(30) Priorität: 11.11.2015 EP 15003224
(43) Veröffentlichungstag der Anmeldung: 19.09.2018
(73) Patentinhaber: THOR GmbH, 67346 Speyer (DE)
(72) Erfinder: BUTZ, Volker, 67434 Neustadt an der Weinstrasse (DE)
(86) Internationale Anmeldenummer: PCT/EP2016/001797
(87) Internationale Veröffentlichungsnummer: WO 2017/080633

(56) Entgegenhaltungen:
- EP-A1- 2 832 924
- EP-A1- 2 860 309
- EP-A2- 0 985 702
- WO-A1-2010/025165
- WO-A1-2010/026230
- GB-A- 1 515 223
- US-A- 4 099 975

## Beschreibung

Die Erfindung betrifft Materialien mit einer Brandschutzbeschichtung, wobei die Brandschutzbeschichtung mindestens ein filmbildendes Bindemittel sowie ein Flammschutzmittel enthält. Die Erfindung betrifft ebenfalls die Verwendung der erfindungsgemäßen Brandschutzbeschichtung zur Herstellung flammgeschützter Materialien.

Materialien, beispielsweise in Form von Leder, Kunstleder, Papier, Holz und textilen Flächengebilden, wie Gewebe für Vorhänge, Teppichböden, Autositzbezüge, Eisenbahnsitze, Kinderbettbezüge usw. bestehen beispielsweise aus Baumwolle, Cellulose-, Polyester-, Polyethylen-, Polyamid-, Polypropylenfasern, oder Fasergemischen. Diese sind im Brandfall meist leicht entflammbar.

Es ist bekannt, Textilien mit Zusammensetzungen von organischen Flammschutzmitteln, wie Dekabromdiphenylether und anderen Flammschutzmitteln, wie Antimontrioxid und Aluminiumtrihydrat in Form wässriger Dispersionen zu behandeln, um ihnen flammhemmende Eigenschaften zu verleihen. Die vorstehend erwähnten Beschichtungen sind jedoch halogenhaltig und damit in vielen Fällen, insbesondere für Textilien, mit denen Endanwender in Berührung kommen, nicht verwendbar.

Es wurde daher bereits vielfach versucht, diese halogenhaltigen Produkte durch halogenfreie zu ersetzen. So sind halogenfreie Produkte, die für die Flammfestausrüstung von Textilien bereits verwendet wurden, beispielsweise die bekannten Salze der Phosphorsäure.

Der Nachteil dieser Produkte besteht jedoch darin, dass sie auf Fasermaterialien keinen zufriedenstellenden Effekt bezüglich flammhemmender Wirkung ergeben.

Entsprechende Zusammensetzungen auf der Basis von Ammoniumpolyphosphat haben hier bereits zu einem positiveren Ergebnis geführt, soweit es die Effektivität der flammhemmenden Wirkung betrifft, sind aber auch noch nicht voll zufriedenstellend. So neigt Ammoniumpolyphosphat bei Feuchtigkeit zum Kleben (Froschgriff).

Eine Gewebeplane mit einer flammhemmenden Schutzschicht ist beispielsweise in der JP-A 10195774 (Kuraray) beschrieben. Für einen wirksamen Flammschutz wird dort aber eine synergistische Kombination aus rotem Phosphor und Melaminphosphat eingesetzt.

Die europäischen Offenlegungsschriften EP 2 932 924 A1 und EP 2 860 309 A1 offenbaren flammgeschützte Materialien, enthaltend: (A) Acrylsäureester-Copolymere als filmbildendes Bindemittel und (B) 2,4,8,10-Tetraoxa-3-9-diphosphaspiro[5.5]undecan-3,9-dibenzyl-3,9-dioxid oder mit aromatisch substituierten Alkylgruppen substituierte 2,4,8,10-Tetraoxa-3-9-Diphosphaspiroverbindungen als Flammschutzmittel. Diese Zusammensetzungen weisen einen vergleichsweise niedrigen Phosphor und hohen Kohlenstoffgehalt auf.

Ferner beschreibt die DE 199 19 707 A1 Fasermaterialien mit einer Brandschutzbeschichtung aus Melaminpolyphosphat. Nachteilig an dieser Zusammensetzung ist jedoch, dass das Melaminpolyphosphat aufgrund seiner vergleichsweise geringen Wirksamkeit als Flammschutzmittel in relativ hoher Dosis dosiert werden muss, wodurch beispielsweise die Brüchigkeit der Beschichtung zunimmt.

Ein weiterer Nachteil des Stands der Technik liegt darin, dass aufgrund der vergleichsweise geringen Effektivität der verwendeten Flammschutzmittel vergleichsweise hohe Mengen dieser eingesetzt werden müssen, was insbesondere im Luftfahrtbereich nachteilig ist.

Es ist daher Aufgabe der vorliegenden Erfindung, Materialien, insbesondere Fasermaterialien, mit einer Brandschutzbeschichtung zur Verfügung zu stellen, die die genannten Nachteile vermeiden und sowohl bezüglich der Flammschutzwirkung als auch bezüglich des "Froschgriffs" den bisherigen Zusammensetzungen gleichwertig bzw. - bei Halogenfreiheit - überlegen sind.

Diese Aufgabe wird gelöst durch Materialien, insbesondere Fasermaterialien, mit einer Brandschutzbeschichtung, enthaltend mindestens ein filmbildendes Bindemittel und ein Flammschutzmittel, dadurch gekennzeichnet, dass das Flammschutzmittel eine Phosphonatverbindung der Formel 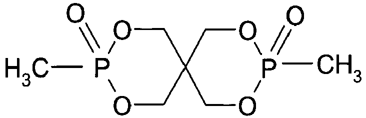 enthält und dass es sich bei dem filmbildenden Bindemittel um Homopolymerisate auf Basis Vinylacetat, Copolymerisate auf Basis Vinylacetat, Ethylen und Vinylchlorid, Copolymerisate auf Basis Vinylacetat und dem Vinylester einer langkettigen, verzweigten Carbonsäure, Copolymerisate auf Basis Vinylacetat und Maleinsäure-di-n-Butylester, Copolymerisate auf Basis Vinylacetat und Acrylsäureester und/oder Copolymerisate auf Basis Acrylsäureester, Vinyltoluol/Acrylat-Polymer, Styrol/Acrylat-Polymere, Styrol/Butadien-Polymere Vinyl/Acrylat-Copolymere und/oder selbstvernetzende und/oder nicht selbstvernetzende, thermoplastische Polymerdispersionen und/oder Polyurethan-Dispersionen handelt.

Der Begriff "Materialien" steht im Rahmen der vorliegenden Erfindung für Materialien wie Leder, Kunstleder, Papier, Holz und textile Flächengebilde, wie Gewebe für Vorhänge, Teppichböden, Autositzbezüge, Eisenbahnsitze, Kinderbettbezüge. Bevorzugt handelt es sich bei den Materialien um Fasermaterialien, wie Gewebe für Vorhänge, Teppichböden, Auto- und Eisenbahnsitzbezüge oder Kinderbettbezüge. Da die vorstehend erwähnten Materialien zumeist aus Baumwolle, Cellulose-, Polyester-, Polyethylen-, Polyamid-, Polypropylenfasern und/oder anderen Fasergemischen bestehen, sind diese im Brandfall meist leicht entflammbar.

Gemäß einer bevorzugten Ausführungsform der Erfindung handelt es sich bei den Materialien um Gewebe für Vorhänge, Teppichböden, Auto- und Eisenbahnsitzbezüge oder Kinderbettbezüge, bestehend aus Baumwolle, Cellulose-, Polyester-, Polyethylen-, Polyamid-, Polypropylenfasern und/oder anderen Fasergemischen.

Bei der in dem Flammschutzmittel enthaltenen Phosphonatverbindung handelt es sich um eine Verbindung der Formel

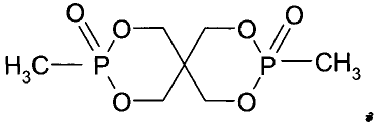

Diese Verbindung, bekannt unter den Bezeichnungen 2,4,8,10-Tetraoxa-3,9-diphosphaspiro [5.5] undecan-3,9-dimethyl-3,9dioxid, 3,9-Dimethyl-2,4,8,10-tetraoxa-3,9-diphosphaspiro [5.5]undecan-3,9-dioxid mit der CAS Nummer 3001-98-7 ist erhältlich bei der THOR GmbH, Speyer, Deutschland, unter den Markennamen AFLAMMIT ^{™} TL1260 bzw. AFLAMMIT ^{™} PCO 962.

Gemäß einer weiteren bevorzugten Ausführungsform enthalten die erfindungsgemäßen Materialien mit einer Brandschutzbeschichtung als Flammschutzmittel ausschließlich eine Verbindung der nachfolgenden Formel

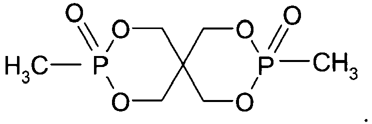

Im Rahmen der Erfindung stellte sich überraschend heraus, dass durch die Verwendung der wenigstens einen Phosphonatverbindung in der Brandschutzbeschichtung Beschichtungen erhalten werden, die gegenüber aus dem Stand der Technik bekannten Beschichtungen eine verbesserte Brandschutzwirkung aufweisen, und zudem unter der Einwirkung von Feuchtigkeit nicht zum Kleben neigt (Froschgriff). Die Beschichtungen zeichnen sich zudem durch einen deutlich geringeren Weißbruch und Schreibeffekt aus. Dadurch, dass die Phosphonatverbindung in der Beschichtungsmasse vollständig gelöst sein kann, sind ferner sehr dünne und/oder transparente Beschichtungen herstellbar.

Gemäß einer bevorzugten Ausführungsform der vorliegenden Erfindung ist die Brandschutzbeschichtung dadurch gekennzeichnet, dass diese als Flammschutzmittel eine Zusammensetzung enthält, die neben der erfindungsgemäßen wenigstens einen Phosphonatverbindung noch eine oder mehrere Verbindung(en) enthält, die ausgewählt ist bzw. sind aus der Gruppe Melamin, Melem, Melam, Melamincyanurat, Melamin-pyro-/poly-/phosphat der Formel (HMPO₃)ₙ, in der M für Melamin steht und n ≥ 2, insbesondere 2 bis 10.000 ist, Ammoniumpolyphosphat der der allgemeinen Formel H₍ₙ₋ₘ₎₊₂(NH₄)ₘPₙO₃ₙ₊₁ in welcher n eine ganze Zahl mit einem Durchschnittswert von etwa 20 bis 3000 bedeutet, Piperazinpyrophosphat, Piperazincyanurat, PPM-Triazin (Poly-[2,4-(piperazin-1,4-yl)-6-(morpholin-4-yl)-1,3,5-triazin], THEIC (1,3,5-Trishydroxyethylisocyanursäure), Poly-/pentaerythrit, Dicyandiamid, Guanidinphosphat, Melaminborat, Zinkborat, Blähgrafit und Metallhydroxide wie z.B. Aluminiumhydroxid (Al(OH)₃).

Allgemein beträgt das Gewichtsverhältnis von der wenigstens einen Phosphonatverbindung zu der wenigstens einen weiteren Verbindung in dem Flammschutzmittel 10:1 bis 1:10, bevorzugt 5:1 bis 1:5.

Gemäß einer weiteren bevorzugten Ausführungsform der Erfindung sind die erfindungsgemäßen flammgeschützten Materialien mit einer Brandschutzbeschichtung dadurch gekennzeichnet, dass die Brandschutzbeschichtung als Flammschutzmittel eine Zusammensetzung enthält, die aus folgenden Komponenten besteht, bzw. die die folgenden Komponenten umfasst:
A: 50 Gew.-% AFLAMMIT ^{™} PCO 962 und 50 Gew.-% Aluminiumtrihydroxid.
B: 30 Gew.-% AFLAMMIT ^{™} PCO 962 und 70 Gew.-% Aluminiumtrihydroxid.
C: 30 Gew.-% AFLAMMIT ^{™} PCO 962, 30 Gew.-% Aluminiumtrihydroxid und 40 Gew.-% Blähgraphit.

Bevorzugt handelt es sich bei dem filmbildenden Bindemittel um Polyvinylacetat-Copolymere oder um Polyacrylate oder um Polyurethane.

Bevorzugt beträgt das Mengenverhältnis von filmbildendem Bindemittel (100%ig) zu dem Flammschutzmittel (10 bis 1) zu (1 bis 5). Besonders bevorzugt beträgt das Mengenverhältnis von filmbildendem Bindemittel (100%ig) zu dem Flammschutzmittel (5 bis 1) zu (1 bis 3).

Bevorzugt sind als weitere Komponenten Wasser sowie gegebenenfalls übliche Hilfs- und Zusatzstoffe enthalten. Bevorzugt sind als Hilfs- und Zusatzstoffe Dispergiermittel, Schaummittel, Schaumstabilisatoren, Verdicker, Fungizide und / oder Entschäumer enthalten.

Entsprechend den nachfolgenden Beispielen wird jeweils zunächst eine Brandschutzbeschichtung erzeugt, diese in einer bestimmten Dicke auf das entsprechende Material bzw. Fasermaterial aufgetragen (appliziert) und getrocknet. Je nach Art und Zusammensetzung der Brandschutzbeschichtung bzw. der Fasermaterialien des Gewebes wird gegebenenfalls noch aufgeschäumt, getrocknet oder vernetzt.

Die Beschichtungen wurden dann entsprechend den Normen:
- für Brandschutzbestimmungen in Gebäuden nach DIN 4102 B2
- für Automobile nach FMVSS 302
- für Bundesbahn nach DIN 54336 geprüft.

Die Klebefreiheit der applizierten Beschichtungen wurde nach der Lagerung bei entsprechendem Klima visuell begutachtet. Die Prüfung auf "Griff" erfolgte nach Klimatisierung haptisch nach einer Skala von 1 (weich) bis 6 (hart).

### Die Erfindung wird anhand der nachstehenden Beispiele erläutert.

### Vergleichsbeispiel 1: Polyester-Webware; Flächengewicht 160 g/m²

**Zusammensetzung:**

| Polyurethan Dispersion (50 %ig) | 600 g/l |
|---|---|
| Dekabromdiphenylether | 80 g/l |
| Antimontrioxid | 40 g/l |
| Pigmentverteiler | 4 g/l |
| Entschäumer | 1 g/l |
| Verdicker (2%iger PU-Verdicker) | 5 g/l |

**Applikation:**

| | |
|---|---|
| 1. 1 Strich, Luftrakel | |
| 2. Trocknung | 120°C |
| 3. Kondensieren | 150°C |
| 4. Trockenauflage | 51 g/m² |

### Vergleichsbeispiel 2: Polyester-Webware; Flächengewicht 160 g/m²

**Zusammensetzung:**

| Polyurethan Dispersion (50%ig) | 600 g/l |
|---|---|
| Aluminiumtrihydroxyd | 120 g/l |
| Pigmentverteiler | 4 g/l |
| Entschäumer | 1 g/l |
| Verdicker (2%iger PU-Verdicker) | 5 g/l |

**Applikation:**

| | |
|---|---|
| 1. 1 Strich, Luftrakel | |
| 2. Trocknung | 120°C |
| 3. Kondensieren | 150°C |
| 4. Trockenauflage | 36 g/m² |

### Vergleichsbeispiel 3: Polyester-Webware; Flächengewicht 160 g/m²

**Zusammensetzung:**

| Polyurethan Dispersion (50%ig) | 600 g/l |
|---|---|
| Ammoniumpolyphosphat | 120 g/l |
| Pigmentverteiler | 4 g/l |
| Entschäumer | 1 g/l |
| Verdicker (2%iger PU-Verdicker) | 5 g/l |

**Applikation:**

| | |
|---|---|
| 1. 1 Strich, Luftrakel | |
| 2. Trocknung | 120°C |
| 3. Kondensieren | 150°C |
| 4. Trockenauflage | 40 g/m² |

### Vergleichsbeispiel 4: Polyester-Webware; Flächengewicht 160 g/m²

**Zusammensetzung:**

| Polyvinurethan Dispersion (50%ig) | 600 g/l |
|---|---|
| Melaminpolyphosphat | 120 g/l |
| Pigmentverteiler | 4 g/l |
| Entschäumer | 1 g/l |
| Verdicker (2%iger PU-Verdicker) | 5 g/l |

**Applikation:**

| | |
|---|---|
| 1. 1 Strich, Luftrakel | |
| 2. Trocknung | 120°C |
| 3. Kondensieren | 150°C |
| 4. Trockenauflage | 37 g/m² |

### Beispiel 1: Polyester-Webware; Flächengewicht 160 g/m²

**Zusammensetzung:**

| | |
|---|---|
| Polyvinylurethan Dispersion (50%ig) | 600 g/l |
| AFLAMMIT ^{™} PCO962 | 120 g/l |
| Pigmentverteiler | 4 g/l |
| Entschäumer | 1 g/l |
| Verdicker (2%iger PU-Verdicker) | 5 g/l |

**Applikation:**

| | |
|---|---|
| 1. 1 Strich, Luftrakel | |
| 2. Trocknung | 120°C |
| 3. Kondensieren | 150°C |
| 4. Trockenauflage | 31 g/m² |

### Beispiel 2: Polyester-Webware; Flächengewicht 160 g/m²

**Zusammensetzung:**

| | |
|---|---|
| Polyvinylurethan Dispersion (50%ig) | 600 g/l |
| AFLAMMIT ^{™} PCO962 | 90 g/l |
| Melamin | 30 g/l |
| Pigmentverteiler | 4 g/l |
| Entschäumer | 1 g/l |
| Verdicker (2%iger PU-Verdicker) | 5 g/l |

**Applikation:**

| | |
|---|---|
| 1. 1 Strich, Luftrakel | |
| 2. Trocknung | 120°C |
| 3. Kondensieren | 150°C |
| 4. Trockenauflage | 33 g/m² |

### Beispiel 3: Polyester-Webware; Flächengewicht 160 g/m²

**Zusammensetzung:**

| | |
|---|---|
| Polyvinylurethan Dispersion (50%ig) | 600 g/l |
| AFLAMMIT ^{™} PCO 962 | 40 g/l |
| Ammoniumpolyphosphat | 40 g/l |
| Aluminiumhydroxyd | 40 g/l |
| Pigmentverteiler | 4 g/l |
| Entschäumer | 1 g/l |
| Verdicker (2%iger PU-Verdicker) | 5 g/l |

**Applikation:**

| | |
|---|---|
| 1. 1 Strich, Luftrakel | |
| 2. Trocknung | 120°C |
| 3. Kondensieren | 150°C |
| 4. Trockenauflage | 37 g/m² |

### Beispiel 4: Polyester-Webware; Flächengewicht 160 g/m²

**Zusammensetzung:**

| | |
|---|---|
| Polyvinylurethan Dispersion (50%ig) | 600 g/l |
| AFLAMMIT ^{™} TL1448^{∗} | 120 g/l |
| Pigmentverteiler | 4 g/l |
| Entschäumer | 1 g/l |
| Verdicker (2%iger PU-Verdicker) | 5 g/l |

**Applikation:**

| | |
|---|---|
| 1. 1 Strich, Luftrakel | |
| 2. Trocknung | 120°C |
| 3. Kondensieren | 150°C |
| 4. Trockenauflage | 31 g/m² |

^{∗} AFLAMMIT ^{™} TL1448: Diphenylspirophosphonat (ist wasserunlöslich und deshalb wässerungsbeständig)

Die Ergebnisse der Untersuchungen, der in den Beispielen 1 bis 4 und Vergleichsbeispielen 1 bis 4 hergestellten Proben, sind in der nachfolgenden Tabelle dargestellt:

| | Vgl.1 | Vgl. 2 | Vgl. 3 | Vgl. 4 | Bsp.1 | Bsp.2 | Bsp.3 | Bsp.4 |
|---|---|---|---|---|---|---|---|---|
| FMVSS302 | SE | brennt | SE | SE | SE | SE | SE | SE |
| DIN54336 | 0s | brennt | brennt | brennt | 0s | 3s | 0s | 7 |
| Griff^{∗} | 4 | 4 | 3 | 5 | 4 | 4 | 4 | 4 |
| Kleben^{∗∗} | Nein | Nein | leicht | nein | nein | nein | Nein | Nein |
| Weißbruch | Ja | Ja | ja | ja | nein | gering | gering | gering |
| Transaprenz | nein | nein | nein | nein | ja | nein | nein | Nein |

| | | | | | | | | |
|---|---|---|---|---|---|---|---|---|
| ^{∗} Griffnote (Lagerung bei 40 °C und 95 % Feuchte über 24 Stunden): 1 = weich; 6 = hart ^{∗∗}Feuchtigkeitstest (Lagerung bei 40 °C und 95 % Feuchte über 24 Std.) | | | | | | | | |

DIN54336: Nachbrennzeit nach Lagerung bei 40 °C und 95 % Feuchte über 24 Stunden und 15 Sekunden Kantenbeflammung

### Vergleichsbeispiel 5: Teppichrückenbeschichtung; PA-Teppich mit 1050 g/m²

**Zusammensetzung:**

| | |
|---|---|
| PVA-Copolymer Dispersion (50 %ig) | 300 g/l |
| Dekabromdiphenylether | 160 g/l |
| Antimontrioxid | 80 g/l |
| Pigmentverteiler | 4 g/l |
| Entschäumer | 2 g/l |
| Verdicker (2%iger PU-Verdicker) | 9 g/l |
| Ammoniak 25% | 5 g/l |

**Applikation:**

| | |
|---|---|
| 1. Pflatschen | |
| 2. Trocknung | 120°C |
| 3. Kondensieren | 150°C |
| 4. Trockenauflage | ca. 600 g/m² |

### Vergleichsbeispiel 6: Teppichrückenbeschichtung; PA-Teppich mit 1050 g/m²

**Zusammensetzung:**

| | |
|---|---|
| PVA-Copolymer Dispersion (50 %ig) | 350 g/l |
| Ammoniumpolyphosphat | 280 g/l |
| Aluminiumhydroxyd | 150 g/l |
| Pigmentverteiler | 4 g/l |
| Entschäumer | 2 g/l |
| Verdicker (2%iger PU-Verdicker) | 9 g/l |
| Ammoniak 25% | 5 g/l |

**Applikation:**

| | |
|---|---|
| 1. Pflatschen | |
| 2. Trocknung | 120°C |
| 3. Kondensieren | 150°C |
| 4. Trockenauflage | ca. 600 g/m² |

### Vergleichsbeispiel 7: Teppichrückenbeschichtung; PA-Teppich mit 1050 g/m²

**Zusammensetzung:**

| | |
|---|---|
| Polyurethan Dispersion (40 %ig) | 450 g/l |
| Ammoniumpolyphosphat | 280 g/l |
| Aluminiumhydroxyd | 150 g/l |
| Pigmentverteiler | 4 g/l |
| Entschäumer | 2 g/l |
| Verdicker (2%iger PU-Verdicker) | 9 g/l |
| Ammoniak 25% | 5 g/l |

**Applikation:**

| | |
|---|---|
| 1. Pflatschen | |
| 2. Trocknung | 120°C |
| 3. Kondensieren | 150°C |
| 4. Trockenauflage | ca. 600 g/m² |

### Vergleichsbeispiel 8: Teppichrückenbeschichtung; PA-Teppich mit 1050 g/m²

**Zusammensetzung:**

| | |
|---|---|
| PVA-Copolymer Dispersion (50 %ig) | 400 g/l |
| Ammoniumpolyphosphat | 100 g/l |
| Aluminiumhydroxyd | 150 g/l |
| Blähgrafit | 150 g/l |
| Pigmentverteiler | 4 g/l |
| Entschäumer | 2 g/l |
| Verdicker (2%iger PU-Verdicker) | 9 g/l |
| Ammoniak 25% | 5 g/l |

**Applikation:**

| | | |
|---|---|---|
| 1. | Pflatschen | |
| 2. | Trocknung | 120°C |
| 3. | Kondensieren | 150°C |
| 4. | Trockenauflage | ca. 600 g/m² |

### Beispiel 5: Teppichrückenbeschichtung; PA-Teppich mit 1050 g/m2

**Zusammensetzung:**

| | |
|---|---|
| PVA-Copolymer Dispersion (50 %ig) | 300 g/l |
| AFLAMMIT ^{™} PCO 962 | 80 g/l |
| Aluminiumhydroxyd | 100 g/l |
| Blähgrafit | 150 g/l |
| Pigmentverteiler | 4 g/l |
| Entschäumer | 2 g/l |
| Verdicker (2%iger PU-Verdicker) | 9 g/l |
| Ammoniak 25% | 5 g/l |

**Applikation:**

| | | |
|---|---|---|
| 1. | Pflatschen | |
| 2. | Trocknung | 120°C |
| 3. | Kondensieren | 150°C |
| 4. | Trockenauflage | ca. 450 g/m² |

### Beispiel 6: Teppichrückenbeschichtung; PA-Teppich mit 1050 g/m²

**Zusammensetzung:**

| | |
|---|---|
| Polyurethan Dispersion (40 %ig) | 380 g/l |
| AFLAMMIT ^{™} PCO 962 | 120 g/l |
| Aluminiumhydroxyd | 70 g/l |
| Blähgrafit | 150 g/l |
| Pigmentverteiler | 4 g/l |
| Entschäumer | 2 g/l |
| Verdicker (2%iger PU-Verdicker) | 9 g/l |
| Ammoniak 25% | 5 g/l |

**Applikation:**

| | | |
|---|---|---|
| 1. | Pflatschen | |
| 2. | Trocknung | 120°C |
| 3. | Kondensieren | 150°C |
| 4. | Trockenauflage | ca. 450 g/m² |

Die Ergebnisse der Untersuchungen der in den Beispielen 5 und 6 und Vergleichsbeispielen 5 bis 8 hergestellten Proben, sind in der nachfolgenden Tabelle dargestellt:

| | | Limit | Vgl. 5 | Vgl. 6 | Vgl. 7 | Vgl. 8 | Bsp. 5 | Bsp. 6 |
|---|---|---|---|---|---|---|---|---|
| FAR 25.854 | Brennzeit [s] | 15 | 6 | 17 | 40 | 15 | 2 | 1 |
| | Abtropfzeit [s] | 5 | 0 | 2 | 1 | 0 | 0 | 0 |
| | Verkohlungszon e [mm] | 203 | 62 | 100 | 165 | 83 | 40 | 31 |
| DIN 5510-Teil2 | S-Klasse | | S2 | S1 | S1 | S2 | S3 | S4 |
| | ST-Klasse | | ST1 | ST1 | ST1 | ST1 | ST2 | ST2 |
| | | | | | | | | |
| Kleben^{∗} | | | Nein | ja | ja | ja | nein | nein |
| Knicktest^{∗∗} | | | Ok | bricht | bricht | bricht | ok | ok |
| Auflage [g/m²] | | | ca.600 | ca.600 | ca.600 | ca.600 | ca.450 | Ca.45 0 |

| | | | | | | | | |
|---|---|---|---|---|---|---|---|---|
| ^{∗} Klebrigkeit der Beschichtung nach Feuchtigkeitstest (Lagerung bei 40 °C und 95 % Feuchte über 24 Stunden) ^{∗∗} Knicktest (nach Lagerung bei 40 °C und 95 % Feuchte über 24 Stunden): Material wird 1x auf beiden Seiten voll durchgeknickt; Zustand der Beschichtung | | | | | | | | |

## Patentansprüche

1. Flammgeschützte Materialien mit einer Brandschutzbeschichtung enthaltend mindestens ein filmbildendes Bindemittel und ein Flammschutzmittel, **dadurch gekennzeichnet, dass** das Flammschutzmittel eine Phosphonatverbindung der Formel 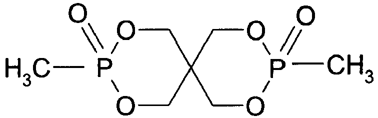
enthält, und dass es sich bei dem filmbildenden Bindemittel um Homopolymerisate auf Basis Vinylacetat,
Copolymerisate auf Basis Vinylacetat, Ethylen und Vinylchlorid,
Copolymerisate auf Basis Vinylacetat und dem Vinylester einer langkettigen, verzweigten Carbonsäure,
Copolymerisate auf Basis Vinylacetat und Maleinsäure-di-n-Butylester, Copolymerisate auf Basis Vinylacetat und Acrylsäureester und/oder Copolymerisate auf Basis Acrylsäureester,
Vinyltoluol/Acrylat-Polymer,
Styrol/Acrylat-Polymere,
Styrol/Butadien-Polymere,
Vinyl/Acrylat-Copolymere und/oder
selbstvernetzende Polyurethan-Dispersionen handelt.

2. Flammgeschützte Materialien nach Anspruch 1, **dadurch gekennzeichnet, dass** diese als Flammschutzmittel ausschließlich eine Verbindung der nachfolgenden Formel 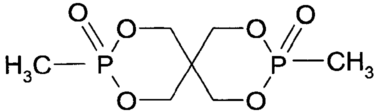 enthalten.

3. Flammgeschützte Materialien nach Anspruch 1 oder 2, **dadurch gekennzeichnet, dass** es sich bei dem filmbildenden Bindemittel um Polyvinylacetat-Copolymere oder um Polyacrylate handelt.

4. Flammgeschützte Materialien nach einem oder mehreren der Ansprüche 1 bis 3, **dadurch gekennzeichnet, dass** das Mengenverhältnis von filmbildenden Bindemittel (100 %-ig) zu dem Flammschutzmittel (10 bis 1) zu (1 bis 5) beträgt.

5. Flammgeschützte Materialien nach einem oder mehreren der Ansprüche 1 bis 3, **dadurch gekennzeichnet, dass** das Mengenverhältnis von filmbildenden Bindemittel (100 %-ig) zu dem Flammschutzmittel (5 bis 1) zu (1 bis 3) beträgt.

6. Flammgeschützte Materialien nach einem oder mehreren der Ansprüche 1 bis 5, **dadurch gekennzeichnet, dass** in ihrer Brandschutzbeschichtung als weitere Komponenten Wasser sowie gegebenenfalls übliche Hilfs- und Zusatzstoffe enthalten sind.

7. Flammgeschützte Materialien nach einem oder mehreren der Ansprüche 1 bis 6, **dadurch gekennzeichnet, dass** in ihrer Brandschutzbeschichtung als Hilfs- und Zusatzstoffe Dispergiermittel, Schaummittel, Schaumstabilisatoren, Verdicker, Fungizide und/oder Entschäumer enthalten sind.

8. Flammgeschützte Materialien nach einem oder mehreren der Ansprüche 1 bis 7, **dadurch gekennzeichnet, dass** es sich dabei um Leder, Kunstleder, Papier, Holz, Gewebe für Vorhänge, Teppichböden, Auto- und Eisenbahnsitzbezüge oder Kinderbettbezüge handelt.

## Claims

1. Flame-resistant materials having a fire-resistant coating containing at least one film-forming binder and a flame retardant, **characterized in that** the flame retardant contains a phosphonate compound of the formula 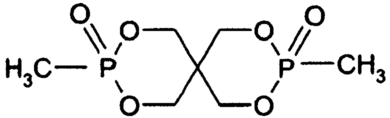
and **in that** the film-forming binder comprises homopolymers based on vinyl acetate,
copolymers based on vinyl acetate, ethylene and vinyl chloride,
copolymers based on vinyl acetate and the vinyl ester of a long-chain, branched carboxylic acid, copolymers based on vinyl acetate and di-n-butyl maleate,
copolymers based on vinyl acetate and acrylic esters and/or copolymers based on acrylic esters,
vinyl toluene-acrylate polymer,
styrene-acrylate polymers,
styrene-butadiene polymers,
vinyl-acrylate copolymers and/or
self-crosslinking polyurethane dispersions.

2. Flame-resistant materials according to Claim 1, **characterized in that** these contain exclusively a compound of the following formula 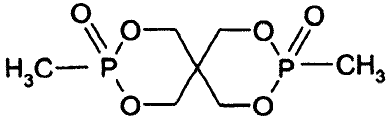 as flame retardant.

3. Flame-resistant materials according to Claim 1 or 2, **characterized in that** the film-forming binder comprises polyvinyl acetate copolymers or polyacrylates.

4. Flame-resistant materials according to one or more of Claims 1 to 3, **characterized in that** the ratio of film-forming binder (100% strength) to the flame retardant is from 10:1 to 1:5.

5. Flame-resistant materials according to one or more of Claims 1 to 3, **characterized in that** the ratio of film-forming binder (100% strength) to the flame retardant is from 5:1 to 1:3.

6. Flame-resistant materials according to one or more of Claims 1 to 5, **characterized in that** water and optionally customary auxiliaries and additives are present as further components in their fire-resistant coating.

7. Flame-resistant materials according to one or more of Claims 1 to 6, **characterized in that** dispersants, foaming agents, foam stabilizers, thickeners, fungicides and/or antifoams are present as auxiliaries and additives in their fire-resistant coating.

8. Flame-resistant materials according to one or more of Claims 1 to 7, **characterized in that** they are leather, artificial leather, paper, wood, woven fabrics for curtains, floor carpets, automobile and railway seat coverings or cot coverings.

## Revendications

1. Matériaux ignifugés dotés d'un revêtement ignifuge contenant au moins un liant filmogène et un agent ignifuge, **caractérisés en ce que** l'agent ignifuge contient un composé de type phosphonate de formule 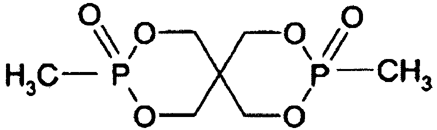
, et **en ce que** le liant filmogène est
des homopolymérisats à base d'acétate de vinyle,
des copolymérisats à base d'acétate de vinyle, d'éthylène et de chlorure de vinyle,
des copolymérisats à base d'acétate de vinyle et de l'ester de vinyle d'un acide carboxylique ramifié à chaîne longue,
des copolymérisats à base d'acétate de vinyle et d'ester de di-n-butyle d'acide maléique,
des copolymérisats à base d'acétate de vinyle et d'ester d'acide acrylique et/ou des copolymérisats à base d'ester d'acide acrylique,
un polymère de vinyltoluène/acrylate,
des polymères de styrène/acrylate,
des polymères de styrène/butadiène,
des copolymères de vinyle/acrylate et/ou
des dispersions de polyuréthane auto-réticulantes.

2. Matériaux ignifugés selon la revendication 1, **caractérisés en ce que** ceux-ci contiennent en tant qu'agent ignifuge exclusivement un composé de la formule suivante

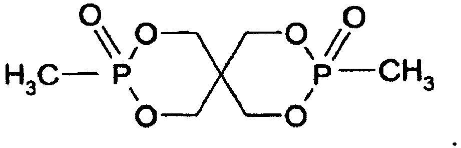

3. Matériaux ignifugés selon la revendication 1 ou 2, **caractérisés en ce que** le liant filmogène est des copolymères de poly(acétate de vinyle) ou des polyacrylates.

4. Matériaux ignifugés selon l'une ou plusieurs des revendications 1 à 3, **caractérisés en ce que** le rapport de quantités de liant filmogène (à 100 %) sur l'agent ignifuge est de (10 à 1) à (1 à 5).

5. Matériaux ignifugés selon l'une ou plusieurs des revendications 1 à 3, **caractérisés en ce que** le rapport de quantités de liant filmogène (à 100 %) sur l'agent ignifuge est de (5 à 1) à (1 à 3).

6. Matériaux ignifugés selon l'une ou plusieurs des revendications 1 à 5, **caractérisés en ce que** de l'eau ainsi qu'éventuellement des auxiliaires et des additifs habituels sont contenus, en tant que composants supplémentaires, dans leur revêtement ignifuge.

7. Matériaux ignifugés selon l'une ou plusieurs des revendications 1 à 6, **caractérisés en ce que** dans leur revêtement ignifuge, en tant qu'auxiliaires et additifs, des agents de dispersions, des agents moussants, des stabilisateurs de mousse, des épaississants, des fongicides et/ou des antimousses sont contenus.

8. Matériaux ignifugés selon l'une ou plusieurs des revendications 1 à 7, **caractérisés en ce que** ce sont du cuir, du cuir artificiel, du papier, du bois, des tissus pour rideaux, pour moquettes, pour housses de sièges automobiles et ferroviaires ou des housses de lits pour enfants.
